Europäisches Patentamt

**European Patent Office**

**Office européen des brevets**

(11) Publication number: **0 139 345**
**B1**

(12) EUROPEAN PATENT SPECIFICATION

(45) Date of publication of patent specification: **21.12.88**

(51) Int. Cl.⁴: **B 62 D 25/16**

(21) Application number: **84303290.5**

(22) Date of filing: **15.05.84**

(54) Spray suppression on motor vehicles.

(30) Priority: **29.07.83 US 518436**

(43) Date of publication of application:
**02.05.85 Bulletin 85/18**

(45) Publication of the grant of the patent:
**21.12.88 Bulletin 88/51**

(84) Designated Contracting States:
**DE FR GB IT**

(56) References cited:
**GB-A-2 035 932**
**GB-A-2 074 109**
**GB-A-2 084 094**
**US-A-3 899 192**
**US-A-4 325 563**

(73) Proprietor: **SCHLEGEL CORPORATION**
**400 East Avenue**
**Rochester, New York 14607 (US)**

(72) Inventor: **Holding, David**
**23 Top O Th'Brow Off Riding Gate**
**Harwood Bolton Lancashire (GB)**

(74) Representative: **Carpmael, John William Maurice et al**
**CARPMAELS & RANSFORD 43 Bloomsbury Square**
**London, WC1A 2RA (GB)**

## Description

This invention relates to spray suppression on motor vehicles, especially articulated heavy goods vehicles.

It is well known that commercial motor vehicles moving at any speed along a wet road will generate a spray screen around and behind them, through which it is almost impossible to see, making it extremely hazardous to overtake. This spray results largely from water off the road surface being picked up by the wheels of the vehicle, due largely to surface tension, and subsequently being formed into small droplets as a result of being smashed against parts of the vehicle, after being thrown off the tyre surface, due to centrifugal action. Also, large vehicle's tyres can each move up to about 90 gallons of water per minute from the road surface when travelling at speed, and a large proportion of this is squeezed out behind each tyre, as a tyre footprint plume of almost solid water, extending rearwardly of the tyre, over an arc subtending about 45° with the road surface. This water is dashed against the mud flap or a following vehicle wheel or other portion of the vehicle, and instantly, as with water thrown off the tread, is formed into droplets. All these droplets then become entrained in the currents of air generated by the rotating wheels and by the passage of the vehicle forwardly at high speed, and result in a blanket of fine mist in the turbulent air behind and to the sides of the vehicle.

Clearly, if the water picked up by the vehicle tyres and the footprint plume can be confined to the wheel arch areas of the vehicle, and/or returned to the road behind the wheels, that will help solve the problems associated with spray generation. Various attempts in this direction have been made, some of the best known being those disclosed in U.S. Patent No. 3 899 192, WO82/03829 and U.K. Patent Specification Nos. 2 078 181A, 2 084 094A and 2 035 932A and U.K. Patent No. 1 483 047. However, none of these prior proposals has resulted in a really satisfactory solution, largely because the spray suppression devices concerned do not form a sufficient barrier for the passage of water droplets emerging from the vehicle's wheel areas, or form what is effectively a solid barrier for both the water and the air currents which are generated. As a result, the air currents exit from under the vehicle body, with water droplets entrained in them, and the spray cloud is hardly suppressed at all.

In GB-A-2 074 109 and EP-A-0 125 072, methods of spray suppression for motor vehicles are disclosed wherein one or more strips of bristles are provided around the periphery and/or across the wheel arch of a vehicle. This results in satisfactory spray suppression, and the present invention seeks to provide modifications of the methods disclosed in said patent specifications which are designed specifically for use on vehicles to which traditional mudguards extending completely over a wheel or wheel set cannot be fitted. In particular a large number of articulated vehicles used in the United States of America cannot have such mudguards (or wings) fitted because of the limited clearance between the underside of a trailer body and a tractor unit when the two are coupled together.

In US-A-3 899 192, a spray suppression system for an articulated vehicle is disclosed wherein several strips of flexible material are connected to support means on the vehicle; these strips are in the form of mats in front of, above and behind the wheels, but the vehicle is not fitted with wings or mudguards, and the mats are really intended as replacements for these. All they can do is act as spray absorbers, and they do not catch spray which becomes entrained in the airstream around the vehicle wheels and which normally escapes sideways, blocking the view of following or overtaking vehicles. For the tandem drive wheels of the tractor part of the vehicle, two of the mats are suspended from the trailer and two are suspended from a frame part of the tractor. When the tractor mat is separated from the trailer, the tractor unit only has two depending mats behind the tandem wheels, and this means that spray suppression is virtually non existent.

The present invention does not suffer from this disadvantage.

According to the present invention, we provide apparatus for suppressing spray created by a wheel of a motor vehicle moving along a wet surface, the vehicle being of the articulated tractor/trailer type, the apparatus comprising first and second strips of flexible porous material of a density sufficient to block the passage of water droplets while allowing the passage of air therethrough, connected to support means on the vehicle, characterised in that the support means comprises first and second quarter wings which cover the wheel in fore and aft regions as seen in plan and which are mounted on the tractor portion of the vehicle and wherein said strips extend from the arcuate edges of said wings substantially across the space between said edges and said wheel, and in that further spray suppression means is provided to suppress spray which would otherwise escape from between said quarter wings, said further spray suppression means comprising a third strip of flexible porous material of a density sufficient to block the passage of water droplets while allowing the passage of air therethrough.

In accordance with one embodiment of the invention, a strip of flexible porous material having similar properties to the first and second strips extends upwardly from the upper transverse edge of each quarter wing to a height sufficient to engage the underside of the body of a trailer when the latter is coupled to the tractor; alternatively, or additionally, at least one strip of flexible porous material is secured to the underside of the trailer body to extend lengthwise thereof and cooperate with said first and second strips secured to the arcuate peripheral edges of the quarter wings.

Preferably, the first and second strips are provided both on the inside and outside curved peripheral edges of the quarter wings, and extend around the top and bottom edge of each wing, where they may be connected together.

One strip may be provided for each arcuate edge on each wing, or, alternatively, the two quarter wings for a wheel or wheel set may be provided with a single strip for the outside edges of the two wings and another for the inside edges of the two wings, each of which strips extends across the gap between the two wings. Furthermore, these two strips could be joined together to provide a single strip for a particular wheel or wheel set, if desired. In these constructions, a carrier for the strip(s), which is used to connect it(them) to the wings, could extend across the gaps between the two wings to support the strip.

Strips may also be provided for both the inside and outside of each wheel or wheel set, which form a seal with regions of the tyre side walls.

If desired, the two quarter wings may be joined together by flange portions which are extensions of the downturned flange or valance portions of each quarter wing. The first and second strip(s) can then be extended and secured to these flange portions as well as to the wings.

In an alternative embodiment of the invention, further sealing means may be provided for each wheel or wheel set in the form of a flexible sheet, which is preferably arcuate in cross section, and extends between the upper transverse edges of the two quarter wings, and has along each side edge a strip which extends between the first and second strips on the arcuate edges of the quarter wings, and forms a seal therewith and with the upper region of the side wall of the wheel or wheel set. This embodiment can be used in conjunction with strips on the trailer body, but this is not necessary. The flexible sheet is preferably adjustably secured to the trailing transverse edge of the front quarter wing and/or to the leading transverse edge of the rear quarter wing; it can be folded up if desired in known manner.

Preferably, a flap, part of which may be impervious to the passage of air and water, and at least the lower part of which may be a flexible strip is provided at the trailing edge of each rear quarter wing, the lower edge of which is in close proximity with the road.

Preferably, each of the flexible porous strips is in the form of a bristle or brush strip, having a first portion for securing, e.g. to the arcuate edge of a quarter wing or to the trailer body, and a second portion integral with the first portion, which is formed of resiliently deformable bristles. A metallic or other carrier may be secured to the first portion.

If desired, each bristle strip may be of composite construction with a first layer of bristles and a second layer either of different bristles or of other flexible porous material, e.g. a non-woven or woven material. The layers may be adjacent or spaced from each other and parallel or inclined to each other.

It is even envisaged that each strip may comprise two bristle strips, separated by another porous layer.

If desired, the bristles, instead of being straight, may be of an angled configuration.

Preferably, the bristles are formed of a synthetic resinous mono-filament and are held in their strip form by a compatible synthetic resinous backing (the first portion). This may be supported in a rigid or flexible holder (the carrier) which may be of generally 'h' shaped configuration, the upstand of the 'h' being used to connect the strip to the wing periphery by means of bolts, rivets or other means.

If desired, the strips may be of different widths. If the strips are wide bristle strips, this means the bristles are quite long, and they may therefore be held together by warp yarns knitted or woven into the bristles or bristle tufts. These warp yarns affect the flexibility, density and porosity of the strips.

Preferably, a sweeper strip, e.g. a brush strip, is located inside the rear lower region of the rear quarter wing, extending between the inner surface of the wing, almost to the tyre(s) surface. Preferably, the outside end of this strip is higher than the inside end.

It is preferred that the first brush strip extends across the trailing transverse edge of the front quarter wing and that the second strip extends across the leading transverse edge of the rear quarter wing, with the free edge of the strips almost touching the rolling surface of the tyre(s), so as to form a seal therewith. Alternatively, separate strips could perform this function.

In certain circumstances, especially when a fifth wheel coupling for connecting the tractor to the trailer is mounted on a sliding sub-frame on the tractor chassis, the trailer may be coupled to the tractor in such a way that its front does not overlie the drive axle, or the front one of a pair, if two, as is often the case, are provided. Accordingly, in order to close off the gap between the tops of the two quarter wings in this situation, an additional flexible strip, e.g. of bristle, may be provided along the trailing transverse edge of the front quarter wing, extending generally horizontally, and/or extending forwardly of the front edge of the trailer, generally horizontally, at least partially to close off said gap.

Obviously, if the tractor is provided with a pair of (or more than two) wheel sets, one behind the other, then each wheel set is provided with spray suppression devices, e.g. a plurality of bristle strips or the like, and the quarter wings as described above.

It has been found that when a vehicle is fitted with spray suppression apparatus as described above, and is driven at high speed on wet roads, the amount of spray thrown into the path of other vehicles travelling behind or alongside the vehicle is quite small in comparison with an identical vehicle having no spray suppression apparatus. It is believed that this is because the quarter wings confine this spray and that the strips, especially those made of bristles, being closely located together and several mono-filament layers thick, will prevent water, picked up by the vehicle wheel tread and formed into thousands of droplets when it is thrown against another part of the vehicle by centrifugal force, from passing through the bristle screen. These water droplets become entrained in the turbulent air beneath the vehicle and surrounding the wheels and it has been found that unless this air can escape through the spray suppression apparatus, the water droplets will follow the airstream. However, the bristle strip does allow air to pass therethrough and acts in effect as a water filter. The water retained by the bristle strips either runs down the bristles and drips back onto the road off the ends of the bristles or else, due to the forward passage of the vehicle along the road, passes to the rear of the wheel or wheel set and cascades down the rear inner face of the rear wing and down the inner surface of the flap and its associated strip and drops back onto the road.

Several embodiments of the present invention are now described by way of example only with reference to the accompanying partly schematic drawings, in which:-

FIGURE 1 shows a side elevation of the driving wheels of the tractor part of an articulated vehicle or semi-trailer with the front end of a trailer body which is coupled to the tractor by means of a fifth wheel, the trailer body being shown in the position it would occupy when coupled to the tractor, and incorporating a first embodiment of the invention;

FIGURE 2 is a view similar to Figure 1 but of a second embodiment of the invention;

FIGURE 3 is a rear perspective view showing the wing and sealing arrangement for one of the wheels shown in Figure 2;

FIGURE 4 is a view similar to Figures 1 and 2 but of a third embodiment of the invention;

FIGURE 5 is a view similar to Figure 3 but of the third embodiment;

FIGURE 6 is a view similar to Figures 1, 2 and 4 showing a fourth embodiment of the invention which can have either of two forms;

FIGURE 7 is a view similar to Figures 3 and 5 but of the fourth embodiment; and

FIGURES 8 and 9 are wholly schematic side views of the embodiment of Figure 6 showing how a seal is achieved regardless of the position of the trailer body.

In the different Figures of the drawings, like parts have the same reference numerals.

Referring to the drawings, the tyres 1 and 3, of two driving wheels or driving wheels sets for the front and rear drive axles of a tractor vehicle having one or more front axles with steering wheels thereon (not shown) are illustrated. For the sake of clarity, the majority of the tractor vehicle including its cab, engine, and the majority of its chassis have been omitted from the drawing. The tractor vehicle is designed for coupling to a trailer body, only the front portion 5 of which is illustrated. The trailer body is coupled to the tractor vehicle by means of what is known as a fifth wheel coupling in accordance with known practice and the position of a front wall 7 of the trailer body relative to the drive axles of the tractor will be dependent upon the position of the fifth wheel coupling which is supported on the tractor chassis. In some countries and particularly in the United States of America, the fifth wheel coupling is supported on a sub-frame which is slidable fore and aft relative to the tractor chassis.

In some countries, especially the United States of America, articulated vehicles, i.e. those incorporating a tractor and semi-trailer connected to the tractor as described above, are designed such that when the trailer body is coupled to the tractor, there is very little clearance between the underside of the front end of the trailer body and the tops of the tyres on the drive axles of the tractor. This clearance can be as little as about 3ins. Because of this, with such vehicles it is not normally possible to fit standard mudguards to the wheel sets of the tractor drive axles and this means that it is not possible to incorporate on the tractors the spray suppression devices such as are described and illustrated in our U.K. Patent Applications 2 074 109A and 8 311 540.

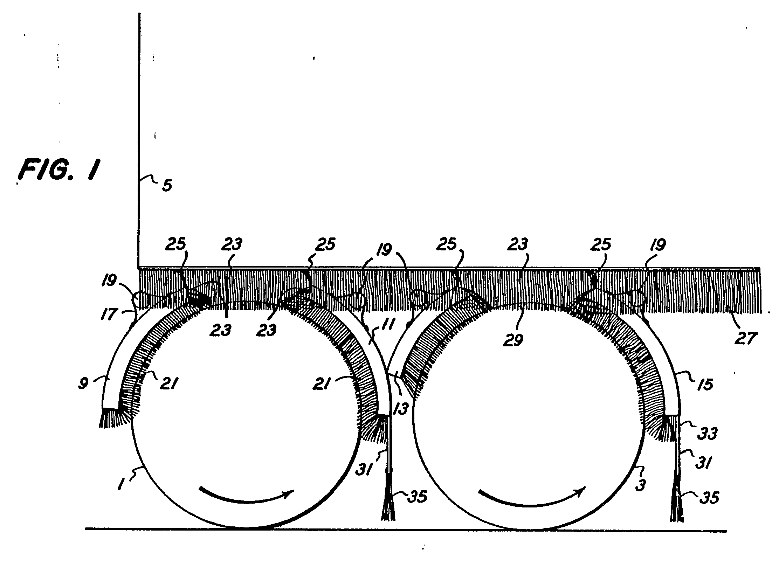

Accordingly, in accordance with the embodiments of this invention shown in Figures 1, 2 and 6, we fit to each of the wheels or wheel sets of the tractor drive axles, front and rear quarter wings 9, 11 and 13, 15, the wings each subtending an arc of somewhere between about 50° and 70°, the length of this arc depending upon whether the wing is a front or rear wing and for the wheel set or wheel of the front or rear drive axle. Each of the quarter wings 9-15 is supported on the tractor chassis in known manner, either in an upper front, or an upper rear wheel 'quandrant', such as by means of straps 17 engaging around crossbars 19 supported on the chassis. A brush or bristle strip 21 is secured around the peripheral edge of each of the quarter wings 9-15. The bristle strips 21 may be secured just to the arcuate downturned or valence regions (inner and outer) but preferably extend around the whole periphery, beginning at a bottom edge, e.g. at the centre, around the bottom corners, then along the arcuate portions of the wings and then extending around the top corners 23 and across the top transverse edge; it may be formed in one or two lengths, but is preferably continuous, i.e. of one piece. The brush or bristle strips 21 may be of any construction but are preferably formed of a dense array of bristles which may be from about 1 mm to a few millimetres thick, the bristles preferably being formed of a resiliently deformable synthetic resinous material held together at one end in known manner, e.g. by means of an extruded bead of compatible material, or in other manner, and the bristles being of sufficient length to extend between means (such as an h-shaped metallic strip) by which they are connected to the edges of the wings and a point slightly in from the peripheral edge of the tyres 1 and 3 so as to bridge the gap between the wing and the tyres. Normally, there would be an overlap of several cms with the peripheral side wall region of the tyres and the bristles may just brush against the tyre side walls, and where they extend across the tyre(s) at the top, they preferably almost touch the rolling surface of the tyre(s). The fixing means are prefersbly an aluminium carrier which is bolted to the wings but may be of any other construction and it is even envisaged that they could be extruded together with the synthetic resinous bead holding together the bristles.

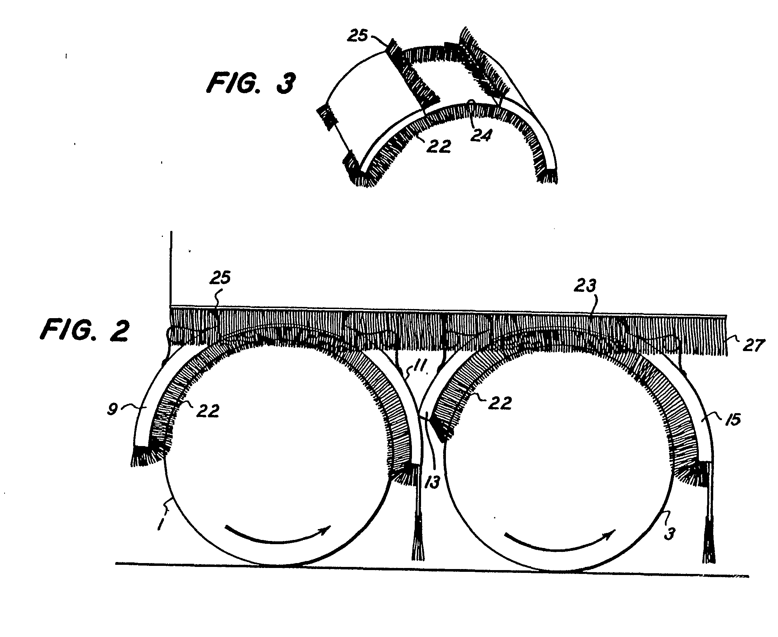

While the brush strips 21 form a seal between the 3 quarter wings 9-15 and the respective tyres 1 and 3, preferably both internally and externally, there is nevertheless an unsealed area indicated generally at 23 at the top of each wheel set. To seal off this area, further brush strips 25 are secured in a similar manner to the strips 21 at the top transverse edges of each of the wings 9-15. Normally, the brush strips 25 would have longer bristles than the strips 21, perhaps as long as about 10-15 cms. As can clearly be seen, from Figures 1 and 2, the length of the bristles in the strips 25 should be sufficient so that when the trailer body 5 is coupled to the tractor, the strips 25 will form a seal with the underside of the trailer body. Obviously, during a coupling operation the strips will deform as illustrated in Figure 1.

In order to seal off the side edges of the area 23, further brush or bristle strips 27 are secured to the underface of the trailer body 5, extending fore and aft from the front edge of the trailer body for a sufficient distance towards the rear of the trailer body so as to extend at least as far as the rear region of the wings 15 when the trailer body is coupled to the tractor, regardless of the position of the fifth wheel coupling. Normally, two strips 27 would be provided in parallel spaced arrangement, one for the left-hand wheels or wheel sets of the tractor drive axles and one for the righthand wheels or wheel sets, the spacing between strips 27 being such that when the trailer body 5 is coupled to the tractor, the wings will pass between the strips, causing them to deform slightly outwards with the strips 27 brushing against the upper portions of the wings 9-15 and the brush strips 21 so as eventually to form a seal therewith.

The length of the bristles of the strips 27 would normally be somewhere between about 10 and 20 cms but in any event they should be long enough so that when the trailer body is coupled to the tractor, the bottom edges of the bristles will overlie and form a seal with the otherwise unsealed top edge regions 29 of the side walls of the tyres 1 and 3, both internally and externally of the tyres or tyre sets, and overlap the top edge regions of the strips 21, thus effectively, with the strips 25, closing off the area 23.

In the alternative construction shown in Figures 2 and 3, instead of providing separate strips 21 for the wings 9 and 11 and for the wings 13 and 15, a single brush strip 22 is provided which bridges the gap between the top edges of the respective pairs of wings 9, 11 and 13, 15. To enable this bridging to occur, the brush strips, instead of being curved around the arcuate upper portions of the wings and extending transversely along the upper wing edges, extend from one wing to the other. To achieve this, the fixing means for the brush strips, e.g. an aluminium carrier and the beading for the bristles, which are illustrated schematically at 24, extend across the gap between the wings of each wheel or wheel set. Thus, in the regions 23 above each wheel or wheel set, side sealing is achieved not only by the strips 27 but also by the strips 22. In this construction, separate brush strips (not shown), the free edges of which almost touch the tyre tread may be secured to the upper transverse edges of the wing.

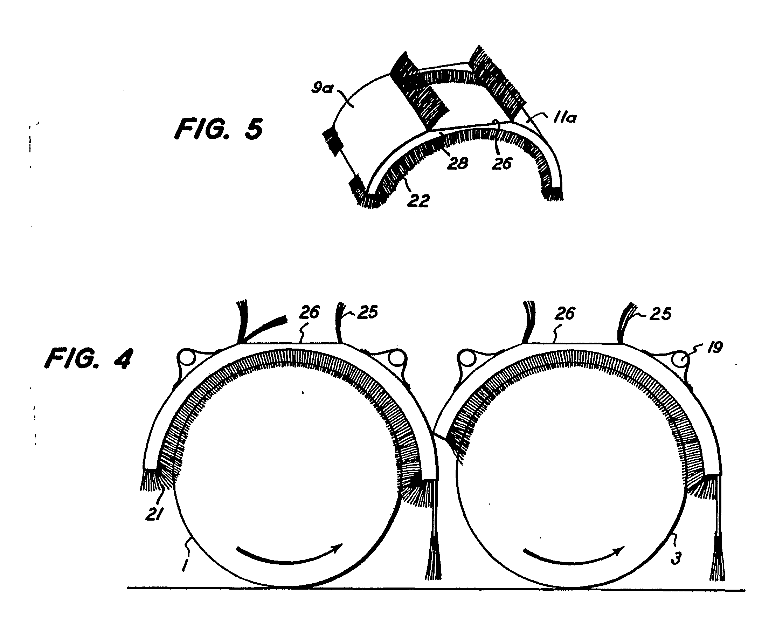

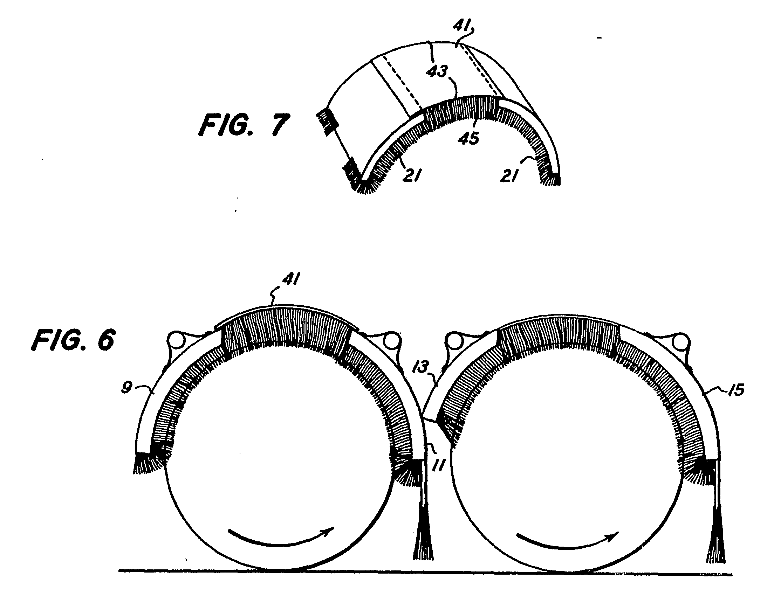

In the construction shown in Figure 4, instead of providing individual quarter wings 9-15 for each of the wheel sets, a standard one-piece mudguard is provided but the top of the mudguard is cut away as shown at 26 so as to allow for the small clearance between the trailer body and the top of the tyre. This means then that in the upper region of each tyre, there is only a downturned flange portion 28 which is integral with the flange portions or valences of the remainder of the mudguard which effectively comprises two interconnected quarter wings such as 9a and 11a (see Figure 5). This means that there is a fixing for a brush strip such as the strip 22 shown in Figures 2 and 3 over its whole length. In other respects there is no difference from the previous constructions.

In the alternative embodiment shown in Figures 6-9, quarter wings 9-15 are provided as in the embodiment shown in Figure 1, but instead of or additional to the brush strips 27 connected to the trailer body 5, flexible sheets of material 41 are secured to and extend between the top edge regions of the pairs of wings 9, 11 and 13, 15. These flexible sheets are semi-rigid and designed to stand above the normal curve of the wings as shown in the left hand side of Figure 6 or alternatively to follow the curve as shown in the right hand half of Figure 6 and will preferably be made of flexible polypropylene (probably EPDM rubber modified) and to each of the side edges 43 of the sheets, a brush strip 45 which would be longer than the strips 21, is connected. The brush strips 45 overlap the strips 21 at their ends and provided the materials are compatible they may be heat sealed or welded to the sheets 41. Hence, the strips 45 fill the gap between the strips 21 and the sheets 41 fill the gap between the quarter wings thus closing off the upper area of each wheel set completely. If desired, the sheets 41 can be so connected to the wings 9, 11 and/or 13, 15 as to be capable of limited movement relative thereto.

It will thus be appreciated that when the trailer body is coupled to the tractor, the sheets 41 can deform as necessary during a coupling operation. Depending on their construction, they will then either seal against the trailer underbody or, alternatively, be slightly spaced from it. This means that when the trailer body pivots relative to the tractor when cornering, little damage can be caused but of course even in the previous constructions, because of the flexible nature of the strips 27, the strips will not be damaged during cornering, but merely deflect and then spring back into position.

The precise construction of the brush strips 25 and 27 and the manner in which they are connected to the wings and trailer body respectively may be the same as but not necessarily the same as the cunstruction of the strips 21. Obviously, however, it is important that they are connected to the wings and trailer body respectively so as to form a seal therewith.

Along the trailing edge of each of the rear wings 11 and 15, a flap 31 is provided. This flap although, it could be formed almost totally of bristle material, is preferably formed of a traditional material 33 (such as rubber or the like from which mudflaps are normally made) to the lower edge of which a bristle stirip 35 is connected, the bottom free ends of the bristles 35 being spaced from the ground G by an amount approximately equal to the travel of the tractor suspension.

When a vehicle travels along a wet road surface, the tyres 1 and 8 will pick up water from the surface and this will be thrown by centrifugal action against the underneath of the trailer body and against any quarter wings or flaps provided and will be atomised and will become entrained in the flow of air around the tyres. Normally, on an untreated vehicle, this water spews out from the sides and rear of the vehicle in the form of a fine mist, thus very considerably reducing visibility and making it extremely hazardous to overtake the vehicle. However, if the vehicle is fitted with spray suppression quarter wings and brush strips as described above, the atomised water particles cannot escape in the air stream from around the tyres because the brush strips act as a moisture barrier, although they allow the passage of air therethrough. As a result, the water tends to cascade down the rear inside surface of the rear wings 11 and 15 and the down the flaps 31 and be deposited back on the road surface by the strips 35. Because the bristles are resiliently deformable, mud and rubbish entrained in the water does not cause clogging.

In all the embodiments, if desired, one or more further 'sweeper' brush strips may extend across the interior of the rear wings 11, 15 (or elsewhere) so as almost to contact the roller surface of the tyres and assist in 'stripping' water from around the tyre treads.

These sweeper strips are preferably located adjacent the trailing edge of each wing 11, 15, on their inner face, and extend from this face almost to the tyre tread, with the inner end of the strip at a lower level than the outer end.

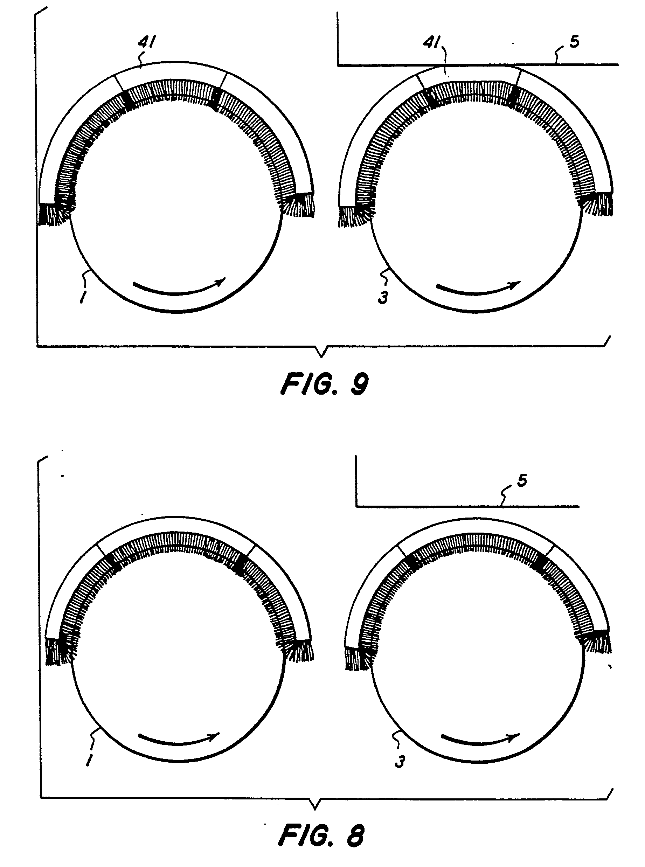

In the construction shown in Figures 8 and 9, the front drive wheels are not covered by the coupled trailer body. This can happen even in the constructions shown in Figure 1-5, largely due to the 'fifth' coupling wheel being moved to a rearward position. To assist in closing off the open top (c.f. area 23) a subsidiary, horizontally extending long bristle brush strip (not shown) may be connected to the top transverse edge of wing 9 (or 11). Furthermore, a similar strip (not shown) may be connected to the trailer wall 7 at its base, so as to project forward horizontally.

It is believed that the water thrown from the tyre treads by centrifugal force and subsequently becoming airborne particles accounts for a major portion of the spray produced by fast travelling motor vehicles. However, this is usually only about 25% of the water on the road surface at any given location and the other 75% or thereabouts is formed by the tread of any tyre into what is known as a footprint plume radiating out from beneath that portion of the tread in contact with the road surface. A very large proportion of this footprint plume is forced rearwards by the passage of the vehicle along the road and the effect is similar to that which would be achieved if water was being sprayed through a hose nozzle up off the road surface in the vicinity of the footprint (i.e. where the tyre tread touches the road), the plume subtending an angle of about 45° with the road surface in a rearward direction. If this footprint plume is allowed to continue its passage rearwardly until it strikes a following wheel or wheel set or another part of the vehicle, the plume will be smashed into thousands of minute water droplets thus creating a further spray cloud. Accordingly the flaps 31 play a very important part in preventing this happening and explains why quarter wings and flaps and associated bristle strips should be provided for each wheel or wheel set. As the vehicle advances so the strip 35 at the bottom of the flap (and the flap) if it is flexible will tend to trail or splay backwardly at an angle to the vertical and this will have the effect of directing the footprint plume extending rearwardly back onto the road surface. Of course, the bristles in the strip 35 absorb a large amount of energy in the plume at the same time as returning the plume to the road surface.

If desired, the bristle strips can be formed from any resiliently deformable bristle material, but a preferred material is a synthetic resinous monofilament such as polypropylene. It is preferred that the bristle material be non-wettable and non-water-absorptive so that water droplets upon impacting the bristles will form globules rather than sheeting on the brushes. This insures that the porosity of the brushes to air is maintained thereby facilitating the removal of water from the air stream. Other bristle materials are however possible but the advantage of forming them of a synthetic resinous mono-filament is that they can be held in position by an extruded synthetic resinous bead compatible with the material of the bristles. The strip, however, can be of a composite construction incorporating two or more bristle layers of different density, stiffness or dimensions, or by a layer of bristles and a layer of other material such as one of the many commercially available non-woven materials. If such other material is used on its own as a spray suppressor it is not as satisfactory as bristle because although initially it may suppress water spray, it will soon become clogged with mud or fibrous material, whereupon it then becomes air impervious and cannot act as a water filter but still allow the passage of air. However, by providing a layer of bristles on the inner face of the other material, the bristles, during use, will move to and fro relative to each other with a trembling motion. As a result, the spacing between the bristles will continually be changing and the effect of this is to prevent clogging either with mud or fibrous material. This self-cleaning action is most important and it is believed that it can only be achieved if bristle material is used.

By providing the internal valance strip on the inner arcuate periphery of the wings, winds flowing perpendicular to the direction of travel of the wheels are prevented from creating additional side spray.

Although brush strips with straight bristles have been described with reference to the drawings, it will be appreciated that the bristles could be kinked inwards or outwards. Furthermore, it will be appreciated that the angle of the bristles whether they be straight or kinked can be slightly different from the angles illustrated.

Many modifications to the construction described with reference to the drawings are possible. For example, it is not essential for the strips 17 to be formed of bristle material; other flexible materials which are preferably porous would suffice. However, if bristles are incorporated in the strip it is self-cleaning which is an advantage.

The bristle strips may be formed in any one of a different number of ways but a particularly suitable method is that disclosed in our U.K. Patent No. 1 457 074. At some stage during their manufacture, warp yarns are normally incorporated in the bristle strips and advantageously some of these warp yarns may be kept in the strip so as to reduce its flexibility and thus also affect its porosity. It is especially advantageous to incorporate these yarns in the base portion only of strips 25 and 45 to provide some stiffening if they are bristle strips.

A big advantage of using bristle strips for the spray suppressing apparatus is that their flexibility means that they are continually flexing in use and hence when there is snow on the road surface, slush does not stick to them. Other types of spray suppressors tend to encourage a buildup of slush. Furthermore, if a vehicle is left standing and the bristles become frozen together, the bristles are not damaged by ice and in practice it is found that the ice soon breaks free due to the flexible nature of the bristles. What is more, even if the vehicle wheels are fitted with chains, these chains cannot damage the bristles since they merely flex out of the way. This is of course also the case when the drive wheels of the tractor, during cornering, move relative to the trailer since the wheels can actually move transversely through the strips 27. Again, this cannot occur with other types of spray suppression apparatus which must necessarily therefore be further spaced from the tyres.

As described the bristle strip at the front edge of each wheel or wheel set is at approximately axle height. It may however be somewhat higher than this and a line drawn from the bristle strip to the axle may subtend an angle of about 20° with the horizontal. Normally, however, at the trailing edge of the wheel or wheel set the bristle strip would be at about axle level or slightly below it, with the flap and its attached bristle strip below that.

Although it is preferred that the bristle strips shown are continuous, they could if desired incorporate one or more joints, for example along the leading or trailing edges of the wings.

While the invention has been described in connection with certain preferred embodiments thereof, those skilled in the art will appreciate that certain modifications and changes may be made therein without departing from the scope of the invention which is intended to be limited solely by the appended claims.

## Claims

1. Apparatus for suppressing spray created by a wheel (1 or 3) of a motor vehicle moving along a wet surface, the vehicle being of the articulated tractor/trailer type, the apparatus comprising first and second strips (21) of flexible porous material of a density sufficient to block the passage of water droplets while allowing the passage of air therethrough, connected to support means on the vehicle, characterised in that the support means comprises first and second quarter wings (9, 11) which cover the wheel in fore and aft regions as seen in plan and which are mounted on the tractor portion of the vehicle and wherein said strips (21) extend from the arcuate edges of said wings substantially across the space between said edges and said wheel (1), and in that further spray suppression means (23 or 24 or 25 or 45) is provided to suppress spray which would otherwise escape from between said quarter wings (9, 11), said further spray suppression means comprising a third strip of flexible porous material of a density sufficient to block the passage of water droplets while allowing the passage of air therethrough.

2. Spray suppression apparatus as claimed in claim 1 wherein said strips of flexible porous material comprise strips of bristles.

3. Spray suppression apparatus as claimed in claim 2 wherein said bristles comprise elongate filaments of non-water-wettable and non-water-absorptive material.

4. Spray suppression apparatus as claimed in claim 1, 2 or 3 characterised in that said third strip (23) is connected to the trailer (5) of the vehicle and extends lengthwise of the vehicle so that it overlaps the first and second strips (21) and extends between them.

5. Spray suppression apparatus as claimed in any one of the preceding claims, characterised in that said further spray suppression means comprises a strip of flexible porous material (25) which substantially closes the space between the top transverse edges of said quarter wings (9, 11) and the underside of the trailer (5) of said vehicle.

6. Spray suppression apparatus as claimed in any one of the preceding claims wherein said first and second strips of flexible porous material are provided on both inner and outer curved peripheral edge of said quarter wings and extend between said peripheral edges of said quarter wings and an inner surface of said wheel.

7. Spray suppression apparatus as claimed in any one of the preceding claims wherein said first and second strips of material on the arcuate edges of said quarter wings are connected by a further central strip portion (24).

8. Spray suppression apparatus as claimed in claim 7 further comprising a support (26) disposed between said quarter wings (9, 11) and carrying said central strip portion (24).

9. Spray suppression apparatus as claimed in any one of the preceding claims wherein said strips of material extend substantially completely around the periphery of said quarter wings.

10. Spray suppression apparatus as claimed in any one of claims 1-9 characterised in that a flexible sheet (41) of arcuate cross section extends between said quarter wings and in that a fourth strip (45) of a density sufficient to block the passage of water droplets while allowing the passage of air therethrough, extends from an edge (43) of said sheet between said first and second strips (21) and across the gap to said wheel (1).

11. Spray suppression apparatus according to any one of the preceding claims characterised in that a flap (31) is disposed adjacent a rear edge of said first quarter wing (11) and in that a strip (35) of flexible porous material characterised by a density sufficient to block the passage of water droplets while allowing the passage of air therethrough, extends downwardly from a lower edge of said flap (31) into close proximity to the surface on which the vehicle travels.

12. Spray suppression apparatus as claimed in claim 11 wherein said strip (35) comprises a strip of resiliently deformable bristles.

13. An apparatus for suppressing spray generated by a driving wheel of a tractor of an articulated motor vehicle when travelling on a wet road surface comprising first and second quarter wings (9, 11) extending around at least part of two upper wheel quadrants on opposite sides of a vertical line drawn through the axle of said wheel, at least one strip of flexible porous material (21) being of a density sufficient to block the passage of water droplets while allowing the passage of air therethrough, secured to at least one arcuate peripheral edge of each of said wings (9, 11) and arranged in use at least substantially to close off the space between an outer peripheral area of a tyre on said wheel and the outer peripheral edge of said wings (9, 11) and further sealing means (23, 24, 25, 26, 41 or 45) for sealing the gap between the top edges of said wings (9, 11) the underside of a trailer (5) of said vehicle when it is coupled to said tractor, the edges of said at least one strip (21) and an upper part of the side wall of said tyre (1).

**Patentansprüche**

1. Vorrichtung zum Schutz vor der Spritzwirkung eines Rades (1 oder 3) eines auf nasser Oberfläche bewegten Kraftfahrzeugs des aus Zugmaschine und damit durch Gelenk verbundenem Nachläufer bestehenden Typs, die einen ersten und einen zweiten, mit einem Trägermittel am Fahrzeug verbundenen Streifen (21) flexiblen, lokkeren Materials von einer Dichte umfaßt, die für die Sperrung des Durchgangs von Wassertropfen ausreicht aber den Durchgang von Luft erlaubt, dadurch gekennzeichnet, daß die Trägermittel einen ersten und zweiten Viertel-Kotflügel (9, 11) umfassen, die vordere und hintere Bereiche des Rads in Draufsicht abdecken und am Zugmaschinenteil des Fahrzeugs angebracht sind, wobei die genannten Streifen (21) sich von den bogenförmig verlaufenden Kanten der genannten Kotflügel im wesentlichen über den Raum zwischen diesen Kanten und dem Rad (1) hinweg erstrekken, und daß Spritzschutzmittel (23 oder 24 oder 25 oder 45) zur Unterdrükung der Spritzwirkung vorgesehen sind, die andernfalls von dem Bereich zwischen den genannten Viertel-Kotflügel (9, 11) ausgehen würde, und diese weiteren Spritzschutzmittel einen dritten Streifen flexiblen, lokkeren Materials umfassen, dessen Dichte ausreicht für die Sperrung des Durchgangs von Wassertropfen aber den Durchgang von Luft gestattet.

2. Spritzschutzvorrichtung nach Anspruch 1, im welcher die genannten Streifen flexiblen, lockeren Materials von Borsten gebildete Streifen umfassen.

3. Spritzschutzvorrichtung nach Anspruch 2, in welcher die genannten Borsten langgestreckte Filamente von nicht wasserbenetzbarem und nicht wasserabsorbierendem Material umfassen.

4. Spritzschutzvorrichtung nach Anspruch 1, 2 oder 3, dadurch gekennzeichnet, daß der genannte dritte Streifen (23) mit dem Nachläufer (5) des Fahrzeugs verbunden ist und sich in Längsrichtung des Fahrzeugs derart erstreckt, daß er den ersten und den zweiten Streifen (21) überlappt und sich zwischen diesen erstreckt.

5. Spritzschutzvorrichtung nach einem der vorangehenden Ansprüche, dadurch gekennzeichnet, daß die genannte weitere Spritzschutzeinrichtung einen Streifen von flexiblem, lockerem Material (25) umfaßt, die den Raum zwischen den oberen Querkanten der genannten Viertel-Kotflügel (9, 11) und der Unterseite des Nachläufers (5) des Fahrzeugs im wesentlichen schließt.

6. Spritzschutzvorrichtung nach einem der vorangehenden Ansprüche, in welcher die genannten ersten und zweiten Streifen von flexiblem, lockerem Material sowohl an den inneren als auch den äußeren, gekrümmten Peripheriekanten der genannten Viertel-Kotflügel vorgesehen sind und sich zwischen den genannten Peripheriekanten der genannten Viertel-Kotflügel und einer inneren Oberfläche des genannten Rads erstrecken.

7. Spritzschutzvorrichtung nach einem der vorangehenden Ansprüche, in welcher die genannten ersten und zweiten Materialstreifen an den bogenförmig verlaufenden Kanten der genannten Viertel-Kotflügel durch einen weiteren, mittleren Streifenabschnitt (24) verbunden sind.

8. Spritzschutzvorrichtung nach Anspruch 7, die ferner einen Träger (26) umfaßt, der zwischen den Viertel-Kotflügel (9, 11) angeordnet ist und den genannten mittleren Streifen (24) trägt.

9. Spritzschutzvorrichtung nach einem der vorangehenden Ansprüche, in welcher die genannten Materialstreifen sich im wesentlichen gänzlich um die Peripherie der genannten Viertel-Kotflügel erstrecken.

10. Spritzschutzvorrichtung nach einem der Ansprüche 1 bis 9, dadurch gekennzeichnet, daß ein flexibles Blatt (41) von bogenförmigem Querschnitt sich zwischen den genannten Viertel-Kotflügel erstreckt und daß ein vierter Streifen (45), dessen Dichte ausreicht für die Sperrung des Durchgangs von Wassertropfen, aber den Durchgang von Luft erlaubt, sich von einer Kante (43) des genannten Blattes zwischen den genannten ersten und zweiten Streifen (21) und über den Spalt zu dem Rad (1) erstreckt.

11. Spritzschutzvorrichtung nach einem der vorangehenden Ansprüche, dadurch gekennzeichnet, daß ein Lappen (31) angrenzend an die hintere Kante des genannten ersten Viertel-Kotflügel (11) angeordnet ist und daß ein Streifen (35) von flexiblem, lockerem Material, der durch eine Dichte ausgezeichnet ist, die für die Verhinderung des Durchgangs von Wassertropfen ausreicht aber den Durchgang von Luft gestattet, sich von einer unteren Kante des genannten Lappens (31) bis in dichte Nähe zu der Oberfläche erstreckt, auf der das Fahrzeug fährt.

12. Spritzschutzvorrichtung nach Anspruch 11, dadurch gekennzeichnet, daß der genannte Streifen (35) einen Streifen von elastisch deformierbaren Borsten umfaßt.

13. Vorrichtung zum Schutz vor der Spritzwirkung eines Antriebsrads der Zugmaschine eines Gelenk-Kraftfahrzeugs bei der Fahrt auf nasser Fahrbahn mit ersten und zweiten Viertel-Kotflügel (9, 11), die sich um wenigstens einen Teil von zwei oberen Radquadranten auf gegenüberliegenden Seiten einer durch die Achse des genannten Rades gezogenen vertikalen Linie erstrecken, mit wenigsten einem Streifen von flexiblem, lockerem Material (21), dessen Dichte für die Sperrung des Durchgangs von Wassertropfen ausreicht aber den Durchgang von Luft gestattet, der an wenigstens einer bogenförmigen Peripheriekante jedes der genannten Kotflügel (9, 11) befestigt ist und bei Benutzung so angeordnet ist, daß er den Raum zwischen einem äußeren Umfangsgebiet eines Reifens an dem genannten Rad und der äußeren Peripheriekante der genannten Kotflügel (9, 11) wenigstens im wesentlichen abschließt, und mit weiteren Abdichtungsmitteln (23, 24, 25, 26, 41 oder 45) zum Abdichten des Spaltes zwischen den oberen Kanten der genannten Kotflügel (9, 11), der Unterseite eines Nachläufers (5) des genannten Fahrzeugs, wenn dieser mit der Zugmaschine gekuppelt ist, den Kanten des genannten wenigstens einen Streifens (21) und einem oberen Teil der Seitenwand des genannten Reifens (1).

**Revendications**

1. Dispositif pour supprimer les projections créées par une roue (1 ou 3) d'un véhicule à moteur se déplaçant sur une surface mouillée, le véhicule étant du type articulé tracteur/remorque, le dispositif comprenant des première et deuxième bandes (21) de matériau poreux flexible d'une densité suffisante pour bloquer le passage de gouttelettes d'eau tout en permettant le passage d'air au travers, reliées à des moyens de support du véhicule, caractérisé en ce que les moyens de support comprennent des premier et deuxième quarts d'aile (9, 11) qui couvrent la roue dans les régions avant et arrière selon la vue en plan et qui sont montés sur la partie tracteur du véhicule et dans lesquels lesdites bandes (21) s'étendent des bords en arc desdites ailes sensiblement en travers de l'espace enre lesdits bords et ladite roue (1), et en ce que d'autres moyens de suppression de projections (23 ou 24 ou 25 ou 45) sont prévus pour supprimer les projections qui autrement s'échapperaient d'entre lesdits quarts d'aile (9, 11), lesdits autres moyens de suppression de projections comprenant une troisième bande de matériau poreux flexible d'une densité suffisante pour bloquer le passage des gouttelettes d'eau tout en permettant le passage de l'air au travers.

2. Dispositif de suppression de projections selon la revendication 1 dans lequel lesdites bandes de matériau poreux flexible comprennent des bandes de soies.

3. Dispositif de suppression de projections selon la revendication 2 dans lequel lesdites soies comprennent des filaments allongés de matériau non mouillable par l'eau et n'absorbant pas l'eau.

4. Dispositif de suppression de projections selon la revendication 1, 2 ou 3 caractérisé en ce que ladite troisième bande (23) est reliée à la remorque (5) du véhicule et s'étend le long du véhicule de sorte qu'elle recouvre les première et deuxième bandes (21) et s'étend entre elles.

5. Dispositif de suppression de projections selon l'une quelconque des revendications précédentes, caractérisé en ce que ledit autre moyen de suppression de projections comprend une bande de matériau poreux flexible (25) qui ferme sensiblement l'espace entre les bords transversaux supérieurs desdits quarts d'aile (9, 11) et la face inférieure de la remorque (5) dudit véhicule.

6. Dispositif de suppression de projections selon l'une quelconque des revendications précédentes dans lequel lesdites première et deuxième bandes de matériau poreux flexible sont prévues sur les bords à la fois intérieurs et extérieurs périphériques incurvés desdits quarts d'aile et s'étendent entre lesdits bords périphériques desdits quarts d'aile et une surface intérieure de ladite roue.

7. Dispositif de suppression de projections selon l'une quelconque des revendications précédentes dans lequel lesdites première et deuxième bandes de matériau des bords en arc desdits quarts d'aile sont reliées par une autre partie de bande centrale (24).

8. Dispositif de suppression de projections selon la revendication 7 comprenant de plus un support (26) disposé entre lesdits quarts d'aile (9, 11) et portant ladite partie centrale de bande (24).

9. Dispositif de suppression de projections selon l'une quelconque des revendications précédentes dans lequel lesdites bandes de matériau s'étendent sensiblement complètement autour de la périphérie desdits quarts d'aile.

10. Dispositif de suppression de projections selon l'une quelconque des revendications précédentes 1 à 9 caractérisé en ce qu'une feuille flexible (41) de section transversale en arc s'étend entre lesdits quarts d'aile et en ce qu'une quatrième bande (45) de densité suffisante pour bloquer le passage des gouttelettes d'eau tout en permettant le passage de l'air au travers, s'étend d'un bord (43) de ladite feuille entre lesdites première et deuxième bandes (21) et à travers l'intervalle jusqu'à ladite roue (1).

11. Dispositif de suppression de projections selon l'une quelconque des revendications précédentes, caractérisé en ce qu'une bavette (31) est disposée adjacente au bord arrière dudit quart d'aile (11) et en ce qu'une bande (35) de matériau poreux flexible caractérisé par une densité suffisante pour bloquer le passage des gouttelettes d'eau tout en permettant au travers le passage de l'air, s'étend vers le bas à partir d'un bord inférieur de ladite bavette (31) jusqu'à proximité immédiate de la surface sur laquelle se déplace le véhicule.

12. Dispositif de suppression de projections selon la revendication 11 dans lequel ladite bande (35) comprend une bande de soies déformables élastiquement.

13. Dispositif pour supprimer les projections engendrées par une roue motrice d'un tracteur d'un véhicule à moteur articulé lorsqu'il se déplace sur une surface de route mouillée comprenant des premier et deuxième quarts d'aile (9, 11) s'étendant autour d'au moins une partie de deux quadrants supérieurs de roue sur les côtés opposés d'une ligne verticale passant par l'axe de ladite roue, au moins une bande de matériau poreux flexible (21) étant d'une densité suffisante pour bloquer le passage de gouttelettes d'eau tout en permettant le passage de l'air au travers, fixée sur au moins un bord périphérique en arc de chacune desdites ailes (9, 11) et disposée en service au moins sensiblement pour fermer l'espace entre une zone périphérique d'un pneumatique sur ladite roue et le bord périphérique extérieur desdites ailes (9, 11) et d'autres moyens d'étanchéité (23, 24, 25, 26, 41 ou 45) pour rendre étanche l'intervalle entre les bords supérieurs desdites ailes (9, 11) la partie inférieure d'une remorque (5) dudit véhicule quand elle est accouplée au tracteur, les bords de ladite bande (21) au moins et une partie supérieure de la paroi dudit pneumatique (1).

FIG. I

FIG. 3

FIG. 2

EP 0 139 345 B1

FIG. 5

9a

11a

28    26

22

FIG. 4

26    25    26    25

19

21

1    3

EP 0 139 345 B1

FIG. 7

FIG. 6

4

*FIG. 9*

*FIG. 8*